(19) Europäisches Patentamt
European Patent Office
Office européen des brevets

(11) **EP 3 909 787 B1**

(12) **EUROPEAN PATENT SPECIFICATION**

(45) Date of publication and mention of the grant of the patent:
**08.11.2023 Bulletin 2023/45**

(21) Application number: **21168016.0**

(22) Date of filing: **13.04.2021**

(51) International Patent Classification (IPC):
*B60C 1/00* *(2006.01)*   *B60C 3/04* *(2006.01)*
*B60C 11/00* *(2006.01)*   *B60C 19/00* *(2006.01)*
*B60C 19/12* *(2006.01)*

(52) Cooperative Patent Classification (CPC):
**B60C 1/0016; B60C 3/04; B60C 11/005;
B60C 19/002; B60C 19/122**

(54) **TIRE**

REIFEN

PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.05.2020   JP 2020084670**

(43) Date of publication of application:
**17.11.2021   Bulletin 2021/46**

(73) Proprietor: **Sumitomo Rubber Industries, Ltd.
Kobe-shi, Hyogo 651-0072 (JP)**

(72) Inventors:
 • **SOFUE, Naoya
  Kobe-shi,, Hyogo 651-0072 (JP)**

 • **SASAKI, Tatsuya
  Kobe-shi,, Hyogo 651-0072 (JP)**
 • **NAKAJIMA, Hiroki
  Kobe-shi,, Hyogo 651-0072 (JP)**

(74) Representative: **TBK
Bavariaring 4-6
80336 München (DE)**

(56) References cited:
**EP-A1- 3 115 227    EP-A1- 3 406 462
EP-A1- 3 785 928    FR-A1- 2 918 314
JP-A- H05 338 410    US-A1- 2011 259 498**

**Description**

TECHNICAL FIELD

The present invention relates to a tire capable of suppressing a vibration noise of a tire during running while securing running durability.

BACKGROUND OF THE INVENTION

Conventionally, as a method of suppressing a vibration noise of a tire during running, for example, a method of forming a tread rubber of a pneumatic tire into a two-layer structure and using a foam rubber for a rubber layer inside the tread rubber is known (Paragraphs [0018]-[0028] in JP H06-156016). The document US 2011259498 A discloses rubbery compositions used in the crown of tyres having a radial carcass reinforcement for reducing the noise emitted when these tyres are rolling.

SUMMARY OF THE INVENTION

In order to suppress a vibration noise of a tire during running, it is conceivable to increase the density of the tread part of the tire to suppress the vibration of the band layer. However, if the density of the tread part is increased, the energy when the tire rolls is also increased, and thus there is a concern that cracks may be generated in the rubber layer of the tread part, and thereby the rubber may be chipped. Moreover, because the effect of suppressing the vibration noise is reduced as the tire is worn away, there is a concern that the vibration noise will gradually increase as the vehicle runs.

It is an object of the present invention to provide a tire capable of suppressing a vibration noise of a tire during running while securing running durability.

As a result of intensive studies to solve the above-described problems, the present inventors have found that the above-described problems can be solved by forming the tread part into one composed of two or more rubber layers, making density of a rubber layer constituting a tread surface (Dc) smaller than density of an inner rubber layer (Db) having the maximum density of all layers, and configuring the inner rubber layer having the maximum density to be composed of a rubber composition comprising a rubber component comprising an isoprene-based rubber, and conducted further studies to complete the present invention.

That is, the present invention relates to a tire as defined in independent claim 1.

Preferred embodiments are defined in the dependent claims.

According to the present invention, a tire capable of suppressing a vibration noise of the tire during running while securing running durability can be provided.

BRIEF DESCRIPTION OF THE DRAWINGS

FIG. 1 is a cross-sectional view of an example of the tire which is one embodiment of the present invention,

FIG. 2 is a cross-sectional view of an example of the tire which is one embodiment of the present invention, further showing an example of a low-density member.

DETAILED DESCRIPTION

The tire of the present invention comprises a tread part composed of two or more rubber layers, wherein, of the two or more rubber layers, a density Dc of a rubber layer constituting a tread surface and a density Db of an inner rubber layer than the rubber layer constituting the tread surface in the tire radial direction, the density Db being the maximum density of all layers, satisfy the following inequality, $Db/Dc \geq 1.25$, and wherein the rubber layer having the maximum density is composed of a rubber composition comprising a rubber component comprising an isoprene-based rubber.

Although it is not intended to be bound by theory, the following is considered as a mechanism by which the above-described effects are exhibited. That is, the tire comprises a tread part composed of two or more rubber layers, and of the two or more rubber layers, density of a rubber layer constituting a tread surface (Dc) is lower than density of an inner rubber layer (Db) than the rubber layer constituting a tread surface in the tire radial direction and having the maximum density of all layers, and the rubber layer having the maximum density is composed of a predefined rubber composition. Accordingly, the rubber layer having a higher density than the rubber layer constituting a tread surface is placed near the band layer inside the tire tread part, so that the vibration of the band layer is suppressed, and an effect of suppressing the vibration noise can be exhibited. Moreover, the inner rubber layer is not directly worn away even after repeated running, and thus the effect of suppressing the vibration noise is maintained. Furthermore, an increased density of the tread part cause an energy increase during tire rolling and thus there is a concern that cracks may be generated inside the tread, and thereby the rubber may be chipped. In this regard, however, in the tire of the present invention, running durability is improved by using an isoprene-based rubber having a high strength as a constituent of the rubber composition constituting the rubber layer having the maximum density. It is considered that suppression of the vibration noise of the tire during running while securing running durability can be achieved as a result of cooperation of the above-described effects.

The rubber composition satisfies at least the following (a) or (b), (a) the rubber component comprises a liquid polymer, (b) the rubber composition comprises a resin. Thereby, a sea phase composed of an isoprene-based rubber and an island phase composed of a liquid polymer and/or resin are formed in the rubber layer having the maximum density, and it is considered that, even if cracks are generated in the sea phase part, extension thereof is suppressed by the island phase.

A ratio of the thickness of the rubber layer having the maximum density to the tread part is preferably 20% or more. It is considered that the effect of suppressing the vibration sound becomes easily exhibited.

The rubber component preferably comprises at least one diene-based rubber other than the isoprene-based rubber. It is considered that the effect of suppressing the vibration sound becomes easily exhibited.

The rubber composition comprises carbon black, and a content of carbon black in the rubber composition is preferably less than 25% by mass. Thereby, it is considered that heat generation in the rubber layer can be reduced, and an effect of improving the durability performance becomes easily obtained.

For the Dc and the Db, according to the invention $Db/Dc \geq 1.25$. It is considered that the effect of suppressing the vibration sound tends to be easily exhibited.

The liquid polymer is at least one of a liquid isoprene rubber and a liquid styrene-isoprene rubber. It is considered that the effects of the present invention are easy to be exhibited.

The resin is at least one selected from the group consisting of a petroleum resin and a phenol-based resin. It is considered that the effects of the present invention are easy to be exhibited.

The Db is preferably 2.20 g/cm$^3$ or less. It is considered that running durability becomes easy to be secured.

The tire preferably comprises a low-density member having density lower than the Dc on an inner circumferential surface of the tire of the tread part. When a member having density lower than that of the rubber layer constituting the tread surface is provided on the inner circumferential surface of the tire of the tread part, it is considered that the low-density member resonates with the vibration transmitted to the inner circumferential surface of the tire, and it becomes easy to cancel the vibration of the tread part, so that the vibration noise can be further suppressed.

The outer diameter Dt of the tire and the cross-sectional width Wt of the tire preferably satisfy the relational expression of the following inequality (I). Since a pneumatic tire satisfying the following inequality (I) has a narrower width with respect to the outer diameter, it is expected that the vibration in the tread part during running is reduced and then noise from the vibration in the tread part is reduced, and that the natural frequency is raised to a high frequency and then the vibration becomes less sensible to a human body.

$$1963.4 \leq \frac{Dt^2 \times \frac{\pi}{4}}{Wt} \leq 2827.4 \qquad (I)$$

Besides, the outer diameter (Dt) of the tire is an outer diameter of the tire when the tire is mounted on an applicable rim and filled with air at a pressure of 250 kPa. The cross-sectional width (Wt) of the tire is a maximum width between outer surfaces of a sidewall excluding any patterns or letters on the side surface of the tire if any, with the tire being mounted on the applicable rim and filled with air at a pressure of 250 kPa.

Hereinafter, a tire which is one embodiment of the present disclosure will be described. Besides, a numerical value of lower limit combined with "or more (higher)" or "to" and a numerical value of upper limit combined with "or less (lower)" or "to" with respect to description of a numerical range can be arbitrarily combined, and a numerical value in Examples can also be used as an upper or a lower limit. In addition, a numerical range identified with "to" means to include the numerical values of both ends, unless otherwise specified.

<Tire>

The tire comprises a tread part composed of two or more rubber layers, wherein, of the two or more rubber layers, a density Dc of a rubber layer constituting a tread surface and a density Db of an inner rubber layer than the rubber layer constituting a tread surface in the tire radial direction, the density Db being the maximum density of all layers, have a relationship that Db/Dc ≥ 1.25, Besides, in the present specification, density is a weight (g) per 1 cm$^3$ of a sample at 23°C, and, for example, a weight of sample cut into 1 cm$^3$ can be measured, and if a sample does not absorb water, it can be measured according to JIS K 6268. On the other hand, if a sample absorbs water (it is a sponge), it can be measured according to JIS K 7222.

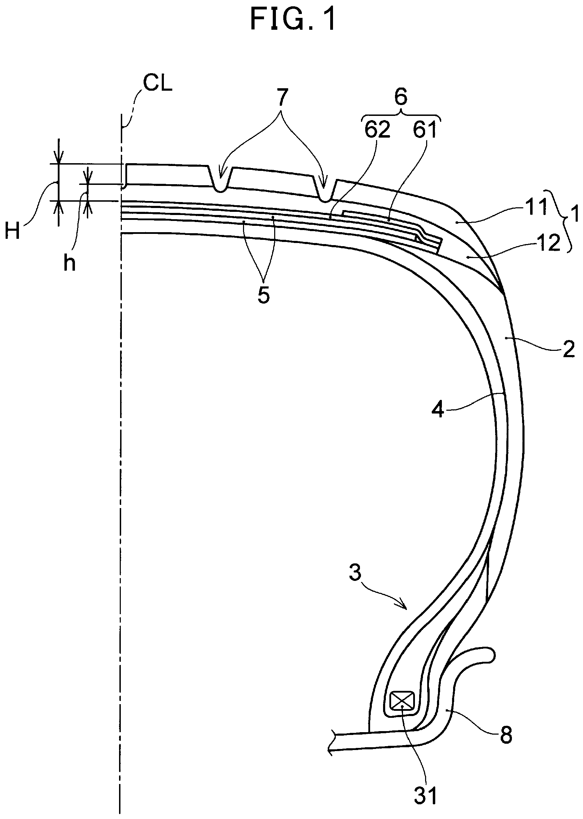

FIG. 1 shows an example of the tire which is one embodiment of the present invention. Hereinafter, the present invention will be described with reference to FIG. 1.

FIG. 1 is a cross-sectional view of the tire in a plane passing through a rotation axis of the tire, showing only the right side facing the tire, divided at the center line CL. The tire in FIG. 1 is configured to comprise a tread part 1, a sidewall 2, a bead part 3, a carcass 4, a belt 5, and a band 6. In the tread part 1, a rubber layer 11 constituting a tread surface is adjacent to an inner rubber layer 12 than the rubber layer 11 in a tire radial direction and having the maximum density of all layers. The bead part 3 comprises a bead core 31. The carcass 4 may comprise a carcass cord (not shown). The belt 5 may comprise a belt cord (not shown). The band 6 comprises an edge band 61 that covers the edge part of the belt 5 only and a full band 62 that covers the entire area of the belt 5. Both the edge band 61 and the full band 62 may comprise a band cord (not shown).

(Tread part)

The tread part is composed of two or more rubber layers. Of the two or more rubber layers, a density Dc of a rubber layer constituting a tread surface and a density Db of an inner rubber layer than the rubber layer constituting a tread surface in the tire radial direction, the density Db being the maximum density of all layers, have a relationship that Db/Dc ≥ 1.25.

In the tire of FIG. 1, the tread part is composed of two rubber layers, and the inner rubber layer 12 than the rubber layer 11 constituting a tread surface in the tire radial direction and having the maximum density of all layers corresponds to a rubber layer having the maximum density.

When the tread part is composed of three or more rubber layers, the rubber layer having the maximum density corresponding to the rubber layer 12 having the maximum density in FIG. 1 can be applied to any of rubber layers constituting a tread part other than rubber layers constituting a tread surface, and it may be applied to at least one of such inner rubber layers or may be applied to a plurality of the inner rubber layers. Moreover, when the tread part is composed of three or more rubber layers, the rubber layer having the maximum density corresponding to the rubber layer 12 having the maximum density in FIG. 1 is preferably arranged at a position as close as possible to the band layer, more preferably at a position adjacent to the band layer, from the viewpoint of effectively suppressing the vibration of the band layer. In addition, with such arrangement, there is an advantage that, even if abrasion of the tire progresses, the rubber layer itself is hard to be worn away.

(Density of rubber layer)

The density of the rubber layer 11 constituting the tread surface (Dc) and the density of the rubber layer 12 having the maximum density (Db) have a relationship of Db/Dc ≥ 1.25.

That is, the density of the rubber layer 12 having the maximum density (Db) is higher than the density of the rubber layer 11 constituting the tread surface (Dc).

An upper limit of Db/Dc is not particularly limited from the viewpoint of suppressing the vibration noise, but is, for example, preferably 1.70 or less, more preferably 1.60 or less, further preferably 1.50 or less, from the viewpoint of running durability.

Here, Db is not particularly limited as long as it is higher than Dc, but in general is preferably more than 1.30 g/cm$^3$, more preferably 1.40 g/cm$^3$ or more, further preferably 1.50 g/cm$^3$ or more, further preferably 1.60 g/cm$^3$ or more, from the viewpoint of suppressing the vibration noise. On the other hand, an upper limit of Db is not particularly limited from the viewpoint of suppressing the vibration noise, but is preferably 2.20 g/cm$^3$ or less, more preferably 2.10 g/cm$^3$ or less, further preferably 2.00 g/cm$^3$ or less, further preferably less than 1.70 g/cm$^3$, from the viewpoint of running durability.

Regarding the inner rubber layer than the rubber layer constituting the tread surface in the tire radial direction and having the maximum density of all layers , which corresponds to the rubber layer 12 having the maximum density, the density can be relatively increased by increasing an amount of a high-density material used as a component of the rubber composition constituting the rubber layer. Alternatively, the density can be relatively reduced by reducing the amount of the high-density material used as a component of the rubber composition. Examples of such high-density material include zinc oxide as well as tungsten, etc.

When zinc oxide or the like is used to increase the density of the rubber layer, the content varies depending on types or contents of components of the rubber composition constituting the rubber layer. However, such content can be appropriately determined by a person skilled in the art in light of a target density. For example, a content of zinc oxide is preferably 50 parts by mass or more, more preferably 60 parts by mass or more, further preferably 70 parts by mass or more, based on 100 parts by mass of the rubber component, from the viewpoint of increasing the density. On the other hand, the content is preferably 250 parts by mass or less, more preferably 220 parts by mass or less, further preferably 200 parts by mass or less, from the viewpoint of not deteriorating the breaking strength.

(Thickness of rubber layer)

A thickness of the inner rubber layer than the rubber layer constituting the tread surface in the tire radial direction and having the maximum density of all layers, which corresponds to the rubber layer 12, to the tread part is preferably 5% or more, more preferably 10% or more, further preferably 15% or more, further preferably 20% or more, further preferably 25% or more, further preferably 30% or more, from the viewpoint of suppressing the vibration noise of the tire during running. On the other hand, the thickness is preferably 60% or less, more preferably 40% or less, from the viewpoint of running durability. Here, the thickness of each rubber layer constituting the tread part means a thickness on the center line CL of the tire. However, as shown in FIG. 1, when the center line CL of the tire passes through a circumferential groove 7 of the tire, a boundary surface of each rubber layer at the end of a tread land part closest to the center line CL of the tire is extended to the center line CL of the tire to recognize the thickness of each rubber layer.

(Rubber layer constituting tread surface)

Regarding the rubber layer constituting the tread surface, the density is not particularly limited as long as it is lower than the density of the rubber layer having the maximum density, but is usually in a range of 0.90 to 1.30 g/cm$^3$.

(Other rubber layers constituting tread part)

In addition to the above-described rubber layer constituting the tread surface and the above-described inner rubber layer than the rubber layer constituting the tread surface in the tire radial direction and having the maximum density of all layers, other rubber layers can be further provided for imparting the tread with various functions. Moreover, other rubber layers provided in this way may be composed of the rubber composition constituting the rubber layer having the maximum density.

(Cord)

In the tire of the present disclosure, as the bead core, the carcass cord, the belt cord, and the band cord, any of conventional cords can be used, and examples of such cords include, for example, a steel cord, an organic fiber cord, and the like. Among them, an organic fiber cord is preferable. The tire of the present disclosure uses a rubber layer corresponding to the rubber layer 12 having a high density in the tread part, and thus the weight of the tire tends to increase. Accordingly, use of an organic fiber cord, being lighter than a steel cord, as a cord of the bead core, the carcass cord, the belt cord, and the band cord contributes to reducing the weight of the tire. As the organic fiber cord, any of those commonly used in the tire industry can be appropriately used, and examples of such organic fiber cord include, for example, a polyester fiber, rayon, an aramid fiber, and the like. The cord can be used alone or two or more thereof can be used in combination.

(Size of tire)

In the tire of the present disclosure, an outer diameter Dt of the tire and a cross-sectional width Wt of the tire preferably satisfy the above-described inequality (I). Here, there is a relationship between Dt and Wt that, as Dt increases, a value represented by the numerical formula in the inequality (I) increases, and conversely, as Dt decreases, the value decreases, while on the other hand, as Wt increases, the value represented by the numerical formula in the inequality (I) decreases, and conversely, as Wt decreases, the value increase. Therefore, Dt and Wt can be adjusted so that they satisfy the above-described inequality (I) by adjusting Dt and Wt while paying attention to these points. Moreover, specific examples of the size of the tire in which Dt and Wt satisfy the above-described inequality (I) include 145/60R18, 145/60R19, 155/55R18, 155/55R19, 155/70R17, 155/70R19, 165/55R20, 165/55R21, 165/60R19, 165/65R19, 165/70R18, 175/55R19, 175/55R20, 175/55R22, 175/60R18, 185/55R19, 185/60R20, 195/50R20, 195/55R20, and the like.

<Rubber composition constituting rubber layer having maximum density>

Regarding the inner rubber layer than the rubber layer constituting the tread surface in the tire radial direction and having the maximum density of all layers, the rubber composition constituting the rubber layer is composed of a rubber composition comprising a rubber component comprising an isoprene-based rubber. Moreover, it is preferable that the rubber composition satisfies at least the following (a) and (b), (a) the rubber component comprises a liquid polymer, (b) the rubber composition comprises a resin.

(Rubber component)

The rubber component comprises an isoprene-based rubber.

<<Isoprene-based rubber>>

Examples of the isoprene-based rubber include, for example, a natural rubber (NR), a purified NR, a modified NR, an isoprene rubber (IR), a modified IR, and the like. As the NR, those common in the tire industry such as, for example, SIR20, RSS#3, TSR20, and the like, can be used. Examples of the purified NR include a deproteinized natural rubber (DPNR), a high-purity natural rubber, and the like, and examples of the modified NR include an epoxidized natural rubber (ENR), a hydrogenated natural rubber (HNR), a grafted natural rubber, and the like. The IR is not particularly limited, and those common in the tire industry can be used. Examples of the modified IR include an epoxidized isoprene rubber, a hydrogenated isoprene rubber, a grafted isoprene rubber, and the like. Among them, it is preferable to include at least one selected from a NR, a purified NR, and a modified NR. Of them, the isoprene-based rubber preferably includes a NR, and more preferably it may be NR only, because it has a property of elongational crystallization and is particularly excellent in tensile strength, allowing for further improvement of fracture properties. The isoprene-based rubber can be used alone or two or more thereof can be used in combination.

A content of the isoprene-based rubber in the rubber component is preferably 40% by mass or more, more preferably 50% by mass or more, further preferably 60% by mass or more, further preferably 70% by mass or more, further preferably 75% by mass or more, from the viewpoint of running durability. Moreover, an upper limit of the content of the isoprene-based rubber in the rubber component is not particularly limited and may be 100% by mass.

<<Other rubber components>>

The rubber component may comprise rubber components other than the above-described isoprene-based rubbers (other rubber components). Such other rubber components are not particularly limited, and any of those conventionally used in the tire industry can be appropriately used, such as diene-based rubbers other than the above-described isoprene-based rubbers and non-diene-based rubbers. Any of the other rubber components here refer to those in a solid state at a normal temperature.

Examples of the diene-based rubber include, for example, a butadiene rubber (BR), a styrene-butadiene rubber (SBR), a styrene-isoprene rubber (SIR), a styrene-isoprene-butadiene rubber (SIBR), a chloroprene rubber (CR), an acrylonitrile-butadiene rubber (NBR), and the like. Examples of the non-diene-based rubber include, for example, a butyl rubber (IIR), a hydrogenated nitrile rubber (HNBR), an ethylene propylene rubber, a silicone rubber, a chlorinated polyethylene rubber, a fluororubber (FKM), an acrylic rubber (ACM), a hydrin rubber, and the like. Other rubber components can be used alone or two or more thereof can be used in combination. Among them, one or more of the diene-based rubbers are preferably used because the effects of the present disclosure can be better exhibited. In particular, among the diene-based rubbers, a BR, a SBR, and the like are preferable, and a BR is further preferable.

«BR»

The BR is not particularly limited, and any of those commonly used in this field can be appropriately used. For example, various BRs can be used, such as a low cis polybutadiene rubber (a low cis BR), a high cis polybutadiene rubber (a high cis BR), a rare earth-based butadiene rubber synthesized using a rare earth element-based catalyst (a rare earth-based BR), a butadiene rubber containing a 1,2-syndiotactic polybutadiene crystal (a SPB-containing BR), and a modified butadiene rubber (a modified BR). Among them, a high cis BR is preferable. As the BR, those manufactured and sold by, for example, Ube Industries, Ltd., Zeon Corporation, JSR Corporation, LANXESS, etc. can be used. The BR can be used alone or two or more thereof can be used in combination.

The high cis BR is a butadiene rubber having a cis content (a cis-1,4 bond content) of 90% or more. Among them, those having a cis-1,4 bond content of 95% or more are preferable, those having a cis-1,4 bond content of 96% or more are more preferable, and those having a cis-1,4 bond content of 97% or more are further preferable. When the high cis BR is compounded, low heat generation, tensile strength, elongation at break, and abrasion resistance can be improved. Besides, the cis content in the present specification is a value measured by infrared absorption spectrometry.

As the rare earth-based BR, those synthesized using a rare earth element-based catalyst and having a vinyl content (a 1,2-bond butadiene unit amount) of preferably 1.8% or less, more preferably 1.0% or less, further preferably 0.8% or less, and a cis content (a cis-1,4 bond content) of preferably 90% or more, more preferably 95% or more, more preferably 96% or more, further preferably 97% or more can be appropriately used. When the vinyl content and the cis content are within the above-described ranges, effects of excellent elongation at break and abrasion resistance of a rubber composition to be obtained can be obtained.

As the rare earth element-based catalyst used for synthesis of the rare earth-based BR, a known one can be used, such as, for example, a catalyst comprising a lanthanum series rare earth element compound, an organic aluminum compound, aluminoxane, a halogen-containing compound, and a Lewis base if necessary.

Examples of the SPB-containing BR include those in which a 1,2-syndiotactic polybutadiene crystal is chemically bonded with the BR and dispersed, but not those in which the crystal is simply dispersed in the BR. A complex elastic modulus tends to be improved because the crystal is chemically bonded to a rubber component and dispersed.

Examples of the modified BR include a modified BR modified at its terminal and/or main chain, a modified BR coupled with tin, a silicon compound, or the like (condensates, those having a branched structure, etc.), a modified BR modified at its terminal and/or main chain with a functional group interacting with silica, in particular a modified BR having at least one selected from the group consisting of a silyl group, an amino group, an amide group, a hydroxyl group, and an epoxy group, and the like. When the modified BR is used, effects of stronger interaction with a filler and an excellent fuel efficiency can be obtained.

A content of the BR when compounded in the rubber component is preferably 5% by mass or more, more preferably 15% by mass or more, further preferably 20% by mass or more. Moreover, the content is preferably 60% by mass or less, more preferably 50% by mass or less, further preferably 45% by mass or less. When the content of the BR is within the above-described ranges, there is a tendency that progress of cracks in the rubber layer is suppressed by phase separation from isoprene-based rubber phase, and the durability performance is improved.

<<ssR>>

Examples of the styrene-butadiene rubber (SBR) include, but not particularly limited to, for example, unmodified emulsion-polymerized styrene-butadiene rubber (E-SBR) and solution-polymerized styrene-butadiene rubber (S-SBR), and modified SBRs thereof such as a modified emulsion-polymerized styrene-butadiene rubber (modified E-SBR) and a modified solution-polymerized styrene-butadiene rubber (modified S-SBR). Examples of the modified SBR include a SBR modified at its terminal and/or main chain, a modified SBR coupled with tin, a silicon compound (a modified SBR of condensate or having a branched structure, etc.), and the like. Moreover, examples of the SBR include an oil-extended type of SBR in which its flexibility is adjusted by adding an extending oil and a non-oil-extended type of SBR in which no extending oil is added, both of which can be used. As the SBR, those manufactured and sold by, for example, JSR Corporation, Asahi Kasei Corporation, Zeon Corporation, ZS Elastomers Co., Ltd., etc. can be used. Among them, it is preferable to include at least one of an E-SBR and a S-SBR, more preferable to include an E-SBR, and further preferable to include an E-SBR only, because it is possible to improve fuel efficiency, wet grip performance, and processability with better balanced. The SBR can be used alone or two or more thereof can be used in combination

A styrene content of the SBR is not particularly limited, but is preferably 15.0% by mass to 40.0% by mass. The styrene content is more preferably 20.0% by mass or more from the viewpoints of rubber strength and grip performance. Moreover, the styrene content is more preferably 30.0% by mass or less from the viewpoints of fuel efficiency and abrasion resistance. Besides, the styrene content in the present specification is a value measured by $^1$H-NMR measurement.

A vinyl content (1,2-bond butadiene unit amount) of the SBR is not particularly limited, but is preferably 10.0 to 80.0%. The vinyl content is preferably 13.0% or more, more preferably 15.0% or more, from the viewpoints of rubber strength and grip performance. Moreover, the vinyl content is preferably 60.0% or less, preferably 40.0% or less, more preferably 20.0% or less, from the viewpoint of fuel efficiency. Besides, the vinyl content in the present specification is a value measured by infrared absorption spectrometry.

A content of the SBR when compounded in the rubber component is preferably 5% by mass or more, more preferably 10% by mass or more, more preferably 20% by mass or more. Moreover, the content is preferably 40% by mass or less, more preferably 30% by mass or less, further preferably 25% by mass or less. When the content of the SBR is within the above-described ranges, there is a tendency that progress of cracks in the rubber layer is suppressed by phase separation from isoprene-based rubber phase, and the durability performance is improved. Besides, when an oil-extended type of SBR is used as the SBR, a content of the SBR itself as a solid content comprised in the oil-extended type of SBR is defined as a content of the SBR in the rubber component.

<<Liquid polymer>>

The rubber component comprises a liquid polymer or may comprise a liquid polymer when the rubber composition comprises resin. In the present disclosure, the "liquid polymer" means a polymer in a liquid state at a normal temperature (25°C) and which exhibits rubber characteristics. The liquid polymer may or may not be hydrogenated and may or may not be modified with a functional group such as a carboxy group. Moreover, when the liquid polymer is a copolymer, it may be a random copolymer of each monomer or a block copolymer, but is preferably a random copolymer.
The liquid polymer is at least one selected from the group consisting of a liquid isoprene rubber (liquid IR) and a liquid styrene-isoprene rubber (liquid SIR). As the liquid polymer, those manufactured and sold by, for example, Kuraray Co., Ltd., Nippon Soda Co., Ltd., Cray Valley, Noveon, etc. can be used. A liquid IR is particularly preferable, from the viewpoint of compatibility with an isoprene-based rubber.

<<Average molecular weight (Mn) of liquid polymer>>

An average molecular weight (Mn) of the liquid polymer is preferably less than 50,000, more preferably 25,000 or less, more preferably 10,000 or less, further preferably 7,000 or less. A lower limit of the Mn is not particularly limited, but is preferably 1,000 or more, more preferably 2,500 or more, further preferably 3,500 or more. When the Mn of the liquid polymer is within the above-described ranges, the liquid polymer becomes easy to enter between molecules of the isoprene-based rubber in the sea phase, and the effects of the present disclosure tend to be obtained. Besides, the Mn of the liquid polymer in the present specification is measured using a gel permeation chromatograph (GPC) and is a value in terms of a standard polystyrene.

<<Content of liquid polymer>>

A content of the liquid polymer in the rubber component is preferably 5% by mass or more, more preferably 10% by mass or more, further preferably 15% by mass or more. Moreover, the content is more preferably 50% by mass or less, more preferably 40% by mass or less, more preferably 35% by mass or less. When the content of the liquid polymer is within the above-described ranges, an island phase becomes easy to be formed, and the effects of the present disclosure tend to be better obtained.

<<Specific examples of rubber components

The rubber component of the present disclosure is preferably composed of an isoprene-based rubber, composed of an isoprene-based rubber and a liquid polymer, or composed of an isoprene-based rubber, a butadiene rubber, and a liquid polymer.

(Resin)

The resin is at least one selected from the group consisting of a petroleum resin and a phenol-based resin.

<<Petroleum resin>>

Examples of the petroleum resin include, for example, a C5-based petroleum resin, an aromatic-based petroleum resin, a C5-C9-based petroleum resin, and the like. The petroleum resin can be used alone or two or more thereof can be used in combination.

<<C5-based petroleum resin>>

In the present specification, the "C5-based petroleum resin" refers to a resin obtained by polymerizing a C5 fraction. Examples of the C5 fraction include, for example, a petroleum fraction corresponding to 4 to 5 carbon atoms such as cyclopentadiene, pentene, pentadiene, and isoprene. As the C5-based petroleum resin, a dicyclopentadiene resin (DCPD resin) is appropriately used. The C5-based petroleum resin can be used alone or two or more thereof can be used in combination.

<<Aromatic-based petroleum resin>>

In the present specification, the "aromatic-based petroleum resin" refers to a resin obtained by polymerizing a C9 fraction, and may be hydrogenated or modified. Examples of the C9 fraction include, for example, a petroleum fraction corresponding to 8 to 10 carbon atoms such as vinyltoluene, alkylstyrene, indene, and methyl indene. As specific examples of the aromatic-based petroleum resin, for example, a cumarone indene resin, a cumarone resin, an indene resin, and an aromatic vinyl-based resin are appropriately used. As the aromatic vinyl-based resin, a homopolymer of $\alpha$-methylstyrene or styrene or a copolymer of $\alpha$-methylstyrene and styrene is preferable, and a copolymer of $\alpha$-methylstyrene and styrene is more preferable, because it is economical, easy to process, and excellent in heat generation. As the aromatic vinyl-based resin, a commercially available product such as, for example, those manufactured by Arizona Chemical Company is appropriately used. The aromatic vinyl-based resin can be used alone or two or more thereof can be used in combination.

<<C5-C9-based petroleum resin>>

In the present specification, the "C5-C9-based petroleum resin" refers to a resin obtained by copolymerizing the C5 fraction and the C9 fraction, and may be hydrogenated or modified. Examples of the C5 fraction and the C9 fraction include the above-described petroleum fractions. As the C5-C9-based petroleum resin, a commercially available product such as, for example, those manufactured by Zibo Luhua Hongjin New Material Co., Ltd., Shandong Qilong Chemical Co., Ltd., and Tosoh Corporation are appropriately used. The C5-C9-based petroleum resin can be used alone or two or more thereof can be used in combination.

<<Terpene-based resin>>

Examples of the terpene-based resin include a polyterpene resin consisting of at least one selected from terpene raw materials such as $\alpha$-pinene, $\beta$-pinene, limonene, and dipentene, an aromatic-modified terpene resin made from a terpene compound and an aromatic compound, a terpene-based resin such as a terpene phenol resin made from a terpene compound and a phenol-based compound (a terpene-based resin which is not hydrogenated), and those in which these terpene-based resins are hydrogenated (hydrogenated terpene-based resins). Here, examples of the aromatic compound used as a raw material for the aromatic-modified terpene resin include, for example, styrene, $\alpha$-methylstyrene, vinyltoluene, divinyltoluene, and the like, and examples of the phenol-based compound used as a raw material for the terpene phenol resin include, for example, phenol, bisphenol A, cresol, xylenol, and the like. A terpene-based petroleum resin can be used alone or two or more thereof can be used in combination.

<<Rosin-based resin>>

The rosin-based resin is a resin comprising a rosin acid as a main component obtained by processing a pine resin. Examples of the rosin-based resin include a naturally occurring rosin resin (polymerized rosin) such as a gum rosin, a wood rosin, and a tall oil rosin comprising a resin acid such as an avietic acid, a neo-avietic acid, a palastolic acid, a levopimalic acid, a pimalic acid, an isopimalic acid, and a dehydroavietic acid as main components, as well as a modified rosin resin such as a hydrogenated rosin resin, an unsaturated carboxylic acid-modified rosin resin, and a rosin-modified phenol resin, a rosin ester such as a rosin glycerin ester and an unsaturated carboxylic acid-modified rosin ester, a disproportionated rosin resin obtained by disproportionating a rosin resin, and the like. The rosin-based resin can be used alone or two or more thereof can be used in combination.

<<Phenol-based resin>>

The phenol-based resin is a resin comprising a phenolic skeleton in its structure, such as, for example, a phenolformaldehyde resin, an alkylphenolformaldehyde resin, an alkylphenol acetylene resin, and an oil-modified phenolformaldehyde resin. The phenol-based resin can be used alone or two or more thereof can be used in combination.

<<Mw of resin>>

A weight-average molecular weight (Mw) of resin is preferably 300 or more, more preferably 400 or more, further preferably 500 or more, from the viewpoint of the effects of the present disclosure. Moreover, the Mw is preferably 15,000 or less, more preferably 10,000 or less, further preferably 8,000 or less. Besides, the weight-average molecular weight (Mw) in the present specification can be calculated in terms of a standard polystyrene based on measurement values obtained by a gel permeation chromatography (GPC) (GPC-8000 Series manufactured by Tosoh Corporation, detector: differential refractometer, column: TSKGEL SUPERMULTIPORE HZ-M manufactured by Tosoh Corporation).

<<Softening point of resin>>

A softening point of resin is preferably 160°C or lower, more preferably 145°C or lower, further preferably 130°C or lower, from the viewpoint of the effects of the present disclosure. Moreover, the softening point is preferably 20°C or higher, more preferably 35°C or higher, further preferably 50°C or higher. Besides, the softening point in the present specification is a temperature at which a sphere drops when the softening point specified in JIS K 6220-1: 2001 is measured with a ring and ball softening point measuring device.

<<SP value of resin>>

A SP value of the resin is preferably 8.0 or more, more preferably 8.5 or more, further preferably 9.0 or more, from the viewpoint of the effects of the present disclosure. Moreover, the SP value is preferably 11.0 or less, more preferably 10.0 or less, further preferably 9.5 or less. Besides, the SP value of resin in the present specification means a solubility parameter calculated by the Hoy method based on a structure of a compound, and the smaller the difference between SP values of two components is, the better the compatibility becomes. The Hoy method is a calculation method described in, for example, K.L. Hoy "Table of Solubility Parameters", Solvent and Coatings Materials Research and Development Department, Union Carbites Corp. (1985).

<<Content of resin>>

A content of the resin based on 100 parts by mass of the rubber component is preferably 1 part by mass or more, more preferably 2 parts by mass or more, more preferably 3 parts by mass or more, further preferably 4 parts by mass or more, further preferably 5 parts by mass or more, from the viewpoint of the effects of the present disclosure. Moreover, the content is preferably 40 parts by mass or less, more preferably 30 parts by mass or less, more preferably 20 parts by mass or less, further preferably 15 parts by mass or less.

(Other components)

The rubber composition can appropriately comprise, in addition to the above-described components, other components commonly used for preparing a rubber composition, for example, a filler, oil, wax, an antioxidant, zinc oxide, a stearic acid, processing aid, a vulcanizing agent, a vulcanization accelerator, and the like.

<<Filler>>

As the filler, any of those commonly used in the tire industry can be appropriately used, and examples of such filler include carbon black, silica, and the like. In the present disclosure, carbon black is preferable.

<<Carbon black>>

Carbon black is not particularly limited, and those common in the tire industry can be used, such as GPF, FEF, HAF, ISAF, and SAF. Specifically, N110, N115, N120, N125, N134, N135, N219, N220, N231, N234, N293, N299, N326, N330, N339, N343, N347, N351, N356, N358, N375, N539, N550, N582, N630, N642, N650, N660, N683, N754, N762, N765, N772, N774, N787, N907, N908, N990, N991, and the like can be appropriately used, and in-house synthesized products and the like can also be appropriately used. These carbon blacks may be used alone or two or more thereof may be used in combination.

A nitrogen adsorption specific surface area ($N_2SA$) of carbon black is preferably 50 m$^2$/g or more, more preferably 80 m$^2$/g or more, further preferably 100 m$^2$/g or more, from the viewpoints of weather resistance and reinforcing properties. Moreover, it is preferably 250 m$^2$/g or less, more preferably 220 m$^2$/g or less, from the viewpoints of dispersibility, fuel efficiency, fracture properties, and durability. Besides, the $N_2SA$ of carbon black in the present specification is a value measured according to A Method under JIS K 6217-2 "Carbon black for rubber industry-Fundamental characteristics-Part 2: Determination of specific surface area-Nitrogen adsorption methods-Single-point procedures".

A content of carbon black based on 100 parts by mass of the rubber component is preferably 5 parts by mass or more, more preferably 10 parts by mass or more, further preferably 20 parts by mass or more. Moreover, the content is preferably 200 parts by mass or less, more preferably 150 parts by mass or less, further preferably 120 parts by mass or less, further preferably 100 parts by mass or less, further preferably 90 parts by mass or less. When the content of carbon black is within the above-described ranges, sufficient fracture properties, good dispersion in a rubber, and good processability tend to be obtained, and the effects of the present disclosure tend to be better exhibited.

A content of carbon black in the rubber composition is preferably less than 35% by mass, more preferably less than 30% by mass, further preferably less than 25% by mass, further preferably less than 20% by mass. Moreover, the content is preferably 5% by mass or more, more preferably 8% by mass or more, further preferably 10% by mass or more.

<<Silica>>

Silica is not particularly limited, and examples thereof include, for example, silica prepared by a dry process (anhydrous silicic acid), silica prepared by a wet process (hydrous silicic acid), and the like. Among them, silica prepared by a wet process is preferable because it has many silanol groups on the surface and many reaction points with a silane coupling agent. As silica, those manufactured and sold by, for example, Evonik Degussa, Solvay, Tosoh Silica Corporation, Tokuyama Corporation, and the like can be used. Silica can be used alone or two or more thereof can be used in combination.

A nitrogen adsorption specific surface area ($N_2SA$) of silica is not particularly limited, but is preferably 80 $m^2/g$ or more, more preferably 90 $m^2/g$ or more, more preferably 100 $m^2/g$ or more, further preferably 110 $m^2/g$ or more, from the viewpoint of securing fuel efficiency and sufficient reinforcing properties. Moreover, the $N_2SA$ is preferably 500 $m^2/g$ or less, more preferably 300 $m^2/g$ or less, more preferably 250 $m^2/g$ or less, further preferably 200 $m^2/g$ or less, from the viewpoints of silica dispersibility and processability. Besides, the $N_2SA$ of silica in the present specification is a value measured by the BET method in accordance with ASTM D3037-81.

A content of silica based on 100 parts by mass of the rubber component is preferably 5 parts by mass or more, more preferably 10 parts by mass or more, further preferably 20 parts by mass or more, from the viewpoint of securing fuel efficiency, wet grip performance, and sufficient reinforcing properties. Moreover, the content is preferably 150 parts by mass or less, more preferably 100 parts by mass or less, further preferably 60 parts by mass or less, from the viewpoints of silica dispersibility, processability, and wet grip performance.

<<Other fillers>>

As the filler, in addition to carbon black and silica, other fillers may or may not be used. Such filler is not particularly limited, and any filler commonly used in this field can be used, such as, for example, aluminum hydroxide, alumina (aluminum oxide), calcium carbonate, talc, and clay. Other fillers can be used alone or two or more thereof can be used in combination.

<<Total content of filler>>

A total content of fillers is preferably 10 parts by mass or more, more preferably 15 parts by mass or more, further preferably 25 parts by mass or more, based on 100 parts by mass of the rubber component. Moreover, the content is preferably 200 parts by mass or less, more preferably 180 parts by mass or less, further preferably 130 parts by mass or less, further preferably 110 parts by mass or less. In the case that the filler consists of carbon black and silica only, if the total content of fillers and the content of either carbon black or silica are determined, a content of the remaining fillers is spontaneously determined as a difference.

<<Silane coupling agent>>

When silica is compounded, it is preferable to comprise a silane coupling agent. As the silane coupling agent, those commonly used in the tire industry can be appropriately used. Examples of such silane coupling agent include, for example, 3-trimethoxysilylpropyl-N,N-dimethylthiocarbamoyltetrasulfide, 3-triethoxysilylpropyl-N,N-dimethylthiocarbamoyltetrasulfide, 2-triethoxysilylethyl-N,N-dimethylthiocarbamoyltetrasulfide, 3- trimethoxysilylpropylbenzothiazoletetrasulfide, 3-triethoxysilylpropylbenzothiazolyltetrasulfide, 3-triethoxysilylpropylmethacrylatemonosulfide, 3-trimethoxysilylpropylmethacrylatemonosulfide, bis(3-triethoxysilylpropyl)tetrasulfide, bis(3-triethoxysilylpropyl)trisulfide, bis(3-triethoxysilylpropyl)disulfide, bis(2-triethoxysilylethyl)tetrasulfide, bis(3-trimethoxysilylpropyl)tetrasulfide, bis(2-trimethoxysilylethyl)tetrasulfide, bis(3-diethoxymethylsilylpropyl) tetrasulfide, dimethoxymethylsilylpropyl-N,N-dimethylthiocarbamoyltetrasulfide, dimethoxymethylsilylpropylbenzothiazoletetrasulfide, and the like. Moreover, mercapto-based silane coupling agents, what are called a silane coupling agent having a mercapto group and a silane coupling agent having a structure in which a mercapto group is protected by a protecting group may be used. The silane coupling agent can be used alone or two or more thereof can be used in combination.

A content of the silane coupling agent is preferably 0.5 parts by mass or more, more preferably 1 part by mass or more, more preferably 2 parts by mass or more, more preferably 5 parts by mass or more, based on 100 parts by mass of silica, from the viewpoint of a coupling effect commensurate with a cost. Moreover, the content is preferably 20 parts by mass or less, more preferably 18 parts by mass or less, more preferably 17 parts by mass or less, further preferably 15 parts by mass or less, further preferably 12 parts by mass or less.

<<Oil>>

Oil is not particularly limited, and any of those commonly used in the tire industry can be appropriately used, such as, for example, a process oil such as paraffin-based, aromatic-based, and naphthene-based process oils. Examples of oil also include a process oil having a low content of a polycyclic aromatic (PCA) compound as an environmental measure. Examples of the low PCA content process oil include Treated Distillate Aromatic Extract (TDAE) in which an aromatic-based process oil is re-extracted, an aroma substitute oil which is a mixture of asphalt and a naphthenic oil, mild extraction solutions (MES), a heavy naphthene-based oil, and the like. Among them, an aromatic-based process oil is preferable, and TDAE oil is more preferable. As oil, those manufactured and sold by, for example, H8vR Group, JXTG Nippon Oil & Energy Corporation, Idemitsu Kosan Co., Ltd., Sankyo Yuka Kogyo K.K., and the like can be used. Oil can be used alone or two or more thereof can be used in combination.

A content of oil when compounded based on 100 parts by mass of the rubber component is not particularly limited, but is preferably 0.5 parts by mass or more, more preferably 1 part by mass or more, further preferably 3 parts by mass or more. Moreover, the content is preferably 25 parts by mass or less, more preferably 20 parts by mass or less, further preferably 15 parts by mass or less.

<<Wax>>

Wax is not particularly limited, and any of those commonly used in the tire industry can be appropriately used, such as, for example, a petroleum-based wax, a mineral-based wax, and a synthetic-based wax. Among them, a petroleum-based wax is preferable. Examples of the petroleum-based wax include, for example, a paraffin wax, a microcrystalline wax, fine selected wax thereof, and the like. As wax, those manufactured and sold by, for example, Ouchi Shinko Chemical Industrial Co., Ltd., Nippon Seiro Co., Ltd., Paramelt B.V., and the like can be used. Wax can be used alone or two or more thereof can be used in combination.

A content of wax when compounded based on 100 parts by mass of the rubber component is preferably 0.3 parts by mass or more, more preferably 0.7 parts by mass or more, further preferably 0.8 parts by mass or more, from the viewpoint of weather resistance of a rubber. Moreover, the content is preferably 3.0 parts by mass or less, more preferably 2.5 parts by mass or less, further preferably 2.0 parts by mass or less, from the viewpoint of preventing whitening of a tire due to bloom.

<<Antioxidant>>

The antioxidant is not particularly limited, and any of those commonly used in the tire industry can be appropriately used, such as, for example, a quinoline-based antioxidant, a quinone-based antioxidant, a phenol-based antioxidant, a phenylenediamine-based antioxidant, and a carbamic acid metal salt. Among them, it is preferable to use at least one of a quinoline-based antioxidant and a phenylenediamine-based antioxidant, and it is more preferable to use a phenylenediamine-based antioxidant. Examples of the quinoline-based antioxidant include, for example, 2,2,4-trimethyl-1,2-dihydroquinoline polymer (TMDQ), and the like. Examples of the phenylenediamine-based antioxidant include, for example, N-isopropyl-N'-phenyl-p-phenylenediamine (IPPD), N-(1,3-dimethylbutyl)-N'-phenyl-p-phenylenediamine (6PPD), N,N'-diphenyl-p-phenylenediamine, N,N'-di-2-naphthyl-p-phenylenediamine, N-cyclohexyl-N'-phenyl-p-phenylenediamine, N,N'-bis(1-methylheptyl)-p-phenylenediamine, N,N'-bis(1,4-dimethylpentyl)-p-phenylenediamine, N,N'-bis(1-ethyl-3-methylpentyl)-p-phenylenediamine, N-4-methyl-2-pentyl-N'-phenyl-p-phenylenediamine, N,N'-diaryl-p-phenylenediamine, hindereddiaryl-p-phenylenediamine, phenylhexyl-p-phenylenediamine, phenyloctyl-p-phenylenediamine, and the like. Among them, N-(1,3-dimethylbutyl)-N'-phenyl-p-phenylenediamine (6PPD) is preferable. When a quinoline-based antioxidant and a phenylenediamine-based antioxidant are used in combination as antioxidants, examples of a preferable specific combination include a combination of TMDQ and 6PPD. As the antioxidant, those manufactured and sold by, for example, Ouchi Shinko Chemical Industrial Co., Ltd., Kawaguchi Chemical Industry Co., Ltd., Sumitomo Chemical Co., Ltd., and the like can be used. The antioxidant can be used alone or two or more thereof can be used in combination.

A content of the antioxidant when compounded based on 100 parts by mass of the rubber component is preferably 0.5 parts by mass or more, more preferably 0.8 parts by mass or more, further preferably 1.0 part by mass or more. Moreover, the content is preferably 7.0 parts by mass or less, more preferably 5.0 parts by mass or less, further preferably 4.0 parts by mass or less. When the content of the antioxidant is within the above-described ranges, an antioxidant effect can be sufficiently obtained, and discoloration due to precipitation of the antioxidant on the tire surface tends to be suppressed.

<<Zinc oxide>>

A content of zinc oxide when compounded based on 100 parts by mass of the rubber component is usually preferably 0.5 parts by mass or more, more preferably 1 part by mass or more, from the viewpoint of processability. Moreover, the content is preferably 10 parts by mass or less, more preferably 5 parts by mass or less, from the viewpoint of abrasion resistance.

Since zinc oxide has a high density, it can be used to increase the density of the rubber composition and the rubber layer composed of the rubber composition by compounding a large amount of zinc oxide. A content of zinc oxide in such case is as described above.

<<Stearic acid>>

A content of stearic acid when compounded based on 100 parts by mass of the rubber component is preferably 0.5 parts by mass or more, more preferably 1 part by mass or more, from the viewpoint of processability. Moreover, the content is preferably 10 parts by mass or less, more preferably 5 parts by mass or less, from the viewpoint of vulcanization rate.

<<Processing aid>>

Examples of processing aid include, for example, a fatty acid metal salt, a fatty acid amide, an amide ester, a silica-surface active agent, a fatty acid ester, a mixture of a fatty acid metal salt and an amide ester, a mixtures of a fatty acid metal salt and a fatty acid amide, and the like. Among them, a fatty acid metal salt is preferable. As processing aid, those manufactured by, for example, Struktol Company of America, LCC, and the like can be used. Processing aid can be used alone or two or more thereof can be used in combination.

A content of processing aid when compounded based on 100 parts by mass of the rubber component is preferably 0.5 parts by mass or more, more preferably 0.8 parts by mass or more, further preferably 1.0 part by mass or more. Moreover, the content of processing aid is preferably 10.0 parts by mass or less, more preferably 8.0 parts by mass or less, further preferably 6.0 parts by mass or less.

<<Vulcanizing agent>>

The vulcanizing agent is not particularly limited, and a known one can be used, such as, for example, an organic peroxide such as dicumyl peroxide, a sulfur-based vulcanizing agent, a resin vulcanizing agent, and a metallic oxide such as magnesium oxide. Among them, a sulfur-based vulcanizing agent is preferable. As the sulfur-based vulcanizing agent, for example, sulfur, a sulfur donor such as, morpholine disulfide, and the like can be used. Among them, sulfur is preferably used. The vulcanizing agent can be used alone or two or more thereof can be used in combination.

Examples of sulfur include a powdered sulfur, a precipitated sulfur, a colloidal sulfur, a surface-treated sulfur (an oil-treated sulfur, a special sulfur treated with a dispersant, a master batch type of sulfur, etc.), an insoluble sulfur (an oil-treated insoluble sulfur, etc.), and the like, any of which can be appropriately used. As sulfur, those manufactured and sold by, for example, Tsurumi Chemical Industry Co., Ltd., Karuizawa Iou Kabushiki Kaisha, Shikoku Chemicals Corporation, Flexsys, Nippon Kanryu Industry Co., Ltd., Hosoi Chemical Industry Co., Ltd., and the like can be used.

A content of the vulcanizing agent when compounded based on 100 parts by mass of the rubber component is preferably 0.5 parts by mass or more, more preferably 1.0 part by mass or more, more preferably 1.5 parts by mass or more. Moreover, the content is preferably 6.0 parts by mass or less, more preferably 5.0 parts by mass or less, further preferably 4.0 parts by mass or less. When the content of the vulcanizing agent is within the above-described ranges, an appropriate reinforcing effect tends to be obtained, and the effects of the present disclosure tend to be better exhibited. Besides, a content of sulfur when a sulfur such as an oil-treated sulfur containing a component other than sulfur is used means a content of a sulfur component itself.

<<Vulcanization accelerator>>

The vulcanization accelerator is not particularly limited, and a known one can be used, such as, for example, a sulfenamide-based, a thiazole-based, a thiuram-based, a thiourea-based, a guanidine-based, a dithiocarbamic acid-based, an aldehyde-amine-based or aldehyde-ammonia-based, an imidazoline-based, or a xanthate-based vulcanization accelerator. As the vulcanization accelerator, those manufactured and sold by, for example, Ouchi Shinko Chemical Industry Co., Ltd., Sanshin Chemical Industry Co., Ltd., and the like can be used. The vulcanization accelerator can be used alone or two or more thereof can be used in combination.

Examples of the sulfenamide-based vulcanization accelerator include, for example, N-(tert-butyl)-2-benzothiazolesulfenamide (TBBS), N-cyclohexyl-2-benzothiazolylsulfenamide (CBS), N,N'-dicyclohexyl-2-benzothiazolylsulfenamide (DZ), and the like. Among them, N-(tert-butyl)-2-benzothiazolesulfeneamide (TBBS) is preferable because the effects of the present disclosure can be better exhibited.

Examples of the guanidine-based vulcanization accelerator include, for example, 1,3-diphenylguanidine (DPG), diorthotrilguanidine, orthotrilbiguanidine, and the like. Among them, 1,3-diphenylguanidine (DPG) is preferable because the effects of the present disclosure can be better exhibited.

A content of the vulcanization accelerator based on 100 parts by mass of the rubber component is preferably 0.5 parts by mass or more, more preferably 1.0 part by mass or more, further preferably 1.5 parts by mass or more. Moreover, the content is preferably 8.0 parts by mass or less, more preferably 6.0 parts by mass or less, further preferably 4.0 parts by mass or less. When the content of the vulcanization accelerator is within the above-described ranges, breaking strength and elongation at break tend to be secured, and the effects of the present disclosure tend to be better exhibited.

<Producing rubber composition constituting the rubber layer having the maximum density>

The rubber composition constituting the rubber layer having the maximum density can be produced by a general method. For example, it can be produced by a method of kneading components other than vulcanizing agents and vulcanization accelerators, of the above-described components, with a known kneader used in a general tire industry such as a closed type kneader such as a Banbury mixer or kneader, and an open roll (a base kneading step), then adding vulcanizing agents and vulcanization accelerators followed by further kneading them (a finish kneading step), and then vulcanizing them, or the like. Besides, remilling (re-kneading step) may be performed between each step. Kneading conditions are not particularly limited, and for example, a method of kneading at a discharge temperature of 120 to 170°C for 1 to 15 minutes in the base kneading step, kneading at a discharge temperature of 120 to 170°C for 1 to 15 minutes in the re-kneading step, and kneading at 70 to 110°C for 1 to 10 minutes in the finish kneading step is exemplified.

<Rubber composition constituting rubber layer constituting tread surface and producing thereof>

The rubber composition constituting the rubber layer constituting the tread surface can be produced by using similar materials and processing them in a similar way in accordance with the above-mentioned description relating to "the rubber composition constituting the rubber layer having the maximum density", except by making the density different. In this case, the density can be appropriately adjusted within ranges of well-known and commonly used techniques by a person skilled in the art.

<Low-density member>

The tire of the present disclosure can be provided with a low-density member having density lower than the Dc on the inner circumferential surface of the tire in the tread part. The low-density member is not particularly limited as long as it has an effect of canceling the vibration transmitted to the inner circumferential surface of the tire by resonance. Examples of such low-density member include, for example, a sealant layer, a noise suppressing body, and a three-dimensional reticulate structure, which are used for preventing puncture.

The low-density member can exhibit its effect by being arranged on the inner circumferential surface of the tire in the tread part. For the low-density member, its thickness in a radial direction of the tire, and its width in a direction of a rotation axis of the tire, or its volume or cross-sectional area, and other properties may differ depending on a type of low-density member and the like, which can be appropriately determined by a person skilled in the art.

The low-density member can be used alone or two or more can be used in combination. Examples of the combination include, but not limited to, for example, a combination of first installing a sealant layer on the inner circumferential surface of the tire in the tread part and then further installing a noise suppressing body, a three-dimensional reticulate structure, or the like on the sealant layer.

(Sealant layer)

As the sealant layer, those commonly used for an inner circumferential surface of a tire in a tread part for preventing puncture can be appropriately used. Specific examples of such sealant layer include, for example, those described in JP 2020-23152 A. A thickness of the sealant layer is usually preferably 1 to 10 mm. A width of the sealant layer is usually preferably 85 to 115%, preferably 95 to 105% of the maximum width of a belt layer.

(Noise suppressing body)

As the noise suppressing body, any of those being able to exhibit a noise suppressing effect in a cavity of a tire can be appropriately used. Specific examples of such noise suppressing body include, for example, those described in JP 2019-142503 A. The noise suppressing body is composed of, for example, a porous sponge material. The sponge material has a spongy porous structure, examples of which include, for example, a so-called sponge itself having open cells in which a rubber or synthetic resin is foamed, as well as a web-like sponge material in which animal fibers, plant fibers, or synthetic fibers, etc. are entwined and integrally connected. Moreover, the "porous structure" includes a structure having not only open pores but also closed pores. Examples of the noise suppressing body include a sponge material having open pores made of polyurethane. As the sponge material, for example, a synthetic resin sponge such as an ether-based polyurethane sponge, an ester-based polyurethane sponge, a polyethylene sponge, and a rubber sponge such as a chloroprene rubber sponge (CR sponge), an ethylene propylene rubber sponge (EDPM sponge), and a nitrile rubber sponge (NBR sponge) can be appropriately used, and in particular, a polyurethane-based or polyethylene-based sponge including an ether-based polyurethane sponge is preferable from the viewpoints of noise suppressing, light weight, adjustability of foaming, and durability.

The noise suppressing body has a long strip shape with a bottom surface fixed to a cavity surface of the tread part and extends in a circumferential direction of the tire. At this time, it may be formed into a substantially annular shape with the outer end portions in the circumferential direction being butted against each other or with the outer end portions being separated from each other in the circumferential direction. The noise suppressing body has substantially the same cross-sectional shape at each position in the circumferential direction except the outer end portions. This cross-sectional shape is preferably flat and oblong with the height being smaller with respect to the width in the axial direction of the tire in order to prevent the tire from tipping over or deforming during running. In particular, if a concave groove that extends continuously in the circumferential direction is provided on the inner surface side in the radial direction, the surface area of the noise suppressing body can be increased, more resonance energy can be absorbed, and the temperature rise of the sponge material can be suppressed by improving the heat dissipation.

A glass transition temperature (Tg) of the noise suppressing body is preferably -55°C to -45°C from the viewpoint of well maintaining durability and flexibility. If flexibility of the noise suppressing body is maintained at a low temperature, the noise suppressing body effectively converts the vibration energy of air into a heat energy to sufficiently reduce the running noise even when, for example, running at a cold weather. In the present specification, Tg is a value measured according to ASTM D 6604 (published in 2013) using a differential scanning calorimeter SC Q2000 manufactured by TA Instruments Japan Inc.

A density of the noise suppressing body is preferably $1.0 \times 10^{-2}$ g/cm$^3$ to $4.0 \times 10^{-2}$ g/cm$^3$ from the viewpoint of reducing the running noise around 250 Hz without increasing weight of a tire.

A volume of the noise suppressing body is preferably 0.4 to 30% of a total volume of a cavity of a tire from the viewpoint of a sufficient conversion of a vibration energy of air. The volume of the noise suppressing body is an apparent total volume of the noise suppressing body and means a volume determined from a contour including pores inside. In the present specification, a total volume V of a cavity of a tire shall be approximately calculated by the following equation under a normal state with no load where a pneumatic tire is mounted to a normal rim and filled with a normal internal pressure:

$$V = A \times \{(Di - Dr)/2 + Dr\} \times \pi$$

Here, in the equation above, "A" is a cross-sectional area of a cavity of a tire obtained by CT scanning a tire/rim assembly under the normal state, "Di" is a maximum outer diameter of a cavity surface of a tire under a normal state, "Dr" is a rim diameter, and "π" is a circular constant.

A tensile strength of the noise suppressing body is preferably 70 to 115 kPa from the viewpoints of durability performance of the noise suppressing body, etc.

(Three-dimensional reticulate structure)

As the three-dimensional reticulate structure, in general, any of those acting as a sound absorbing material can be appropriately used. Specific examples of such sound absorbing material include, for example, those described in JP 2018-90131 A. More specifically, the three-dimensional reticulate structure is formed by irregularly entwining a plurality of filaments obtained by melting resin, and welding the entangled filaments.

The three-dimensional reticulate structure is preferably fixed to a cavity of a tire. A method of fixing it to the cavity of the tire is not particularly limited, and for example, it may be adhered to the inner surface of the tire with an adhesive or the like, but it can also be fixed by use of the sealant material constituting the sealant layer, which is preferable.

A thickness of the three-dimensional reticulate structure is not particularly limited, but is preferably 1.0 to 150 mm, more preferably 30 to 120 mm. A width is not particularly limited, but is preferably 50 to 95%, more preferably 60 to 90% of a width of the sealant layer, because the effects can be obtained more appropriately.

A cross-sectional area ratio of the three-dimensional reticulate structure (that is, (a cross-sectional area of the three-dimensional reticulate structure/a cross-sectional area of the cavity of tire) $\times$ 100) is preferably 2 to 90%, more preferably 5 to 70%, further preferably 20 to 70%, from the viewpoint of an efficient sound absorption performance. Here, in order to change the cross-sectional area ratio, for example, the width and thickness of the three-dimensional reticulate structure may be changed. The cross-sectional area of the three-dimensional reticulate structure is an apparent cross-sectional area of the three-dimensional reticulate structure and refers to a cross-sectional area determined from a contour of the three-dimensional reticulate structure including a cavity inside. The cross-sectional area of the three-dimensional reticulate structure is calculated by dividing the volume of the three-dimensional reticulate structure by an average thickness of the three-dimensional reticulate structure (a thickness in the radial direction of the tire). Here, the volume of the three-dimensional reticulate structure is an apparent total volume of the three-dimensional reticulate structure and refers to a volume determined from a contour of the three-dimensional reticulate structure including the cavity inside. Moreover, the average thickness of the three-dimensional reticulate structure also refers to an average thickness determined from a contour of the three-dimensional reticulate structure including the cavity inside. Furthermore, in the present specification, the cross-sectional area of the cavity of the tire is calculated by dividing a total area of the cavity of the tire by a height of the cavity of the tire in the radial direction of the tire.

An apparent density of the three-dimensional reticulate structure is preferably $1.0 \times 10^{-2}$ g/cm$^3$ to $25.0 \times 10^{-2}$ g/cm$^3$, more preferably $2.0 \times 10^{-2}$ g/cm$^3$ to $20.0 \times 10^{-2}$ g/cm$^3$, further preferably $3.0 \times 10^{-2}$ g/cm$^3$ to $10.0 \times 10^{-2}$ g/cm$^3$, from the viewpoint of an efficient sound absorption performance. Besides, in the present specification, the apparent density is calculated by dividing a mass of the three-dimensional reticulate structure by an apparent total volume of the three-dimensional reticulate structure (a volume determined from a contour of the three-dimensional reticulate structure including the cavity inside), regarding a cavity existing inside the three-dimensional reticulate structure as the volume thereof. Specifically, it can be calculated with a mass obtained from a cubic measurement sample made of the three-dimensional reticulate structure having an approximate shape of 1 m $\times$ 1 m $\times$ 1 m.

A 25% compressive hardness of the three-dimensional reticulate structure is preferably 20 to 250N, more preferably 60 to 220N. When the 25% compression hardness is within the above-described ranges, a good road noise reducing property can be obtained without adversely affecting a sealing property, and a tire is less likely to be damaged when a nail or the like is stuck in the tire. Besides, in the present specification, the 25% compressive hardness of the three-dimensional reticulate structure is measured in accordance with JIS K 6400-2 using a perfect circular pressure plate having a diameter of 200 mm.

In the three-dimensional reticulate structure, the above-described filament is preferably a hollow fiber. Thereby, a better road noise reducing property can be obtained. A hollow ratio of the filament is preferably 10 to 90%, more preferably 20 to 80%, because it is more excellent in sealing property and road noise reducing property. Besides, in the present specification, the hollow ratio of the filament is a value obtained by photographing a section (a cross section) in a direction perpendicular to a filament axis (fiber axis) of the filament and measuring a total area of the cross section (Sa) and an area of a hollow part (Sb) to be calculated by the following equation. However, the Sb means a sum of area of each hollow part if it has a plurality of hollow parts.

$$\text{Hollow rate } (\%) = (\text{Sb}/\text{Sa}) \times 100$$

An average diameter (average fiber diameter) of the above-described filament is not particularly limited, but is preferably 0.1 to 5.0 mm, more preferably 0.3 to 2.0 mm. When the average diameter of the filament is within the above-described ranges, a noise reducing effect can be sufficiently obtained, and a tire can be less likely to be damaged when a nail or the like is stuck in the tire. The average diameter of the filament can be measured by an image analysis of scanning atomic force micrographs, an image analysis of scanning electron micrographs, an image analysis of transmission micrographs, an analysis of X-ray scattering data, a pore electrical resistance method (Coulter principle), etc. Besides, the diameter of the filament means an apparent diameter of a section in a direction perpendicular to the filament axis (fiber axis) of the above-described filament (a diameter including a cavity).

<Producing tire tread and tire>

The tire tread and the tire of the present disclosure can be produced by a usual method using the rubber composition constituting the above-mentioned rubber layer constituting the tread surface and the rubber composition constituting the inner rubber layer than the rubber layer constituting the tread surface in the tire radial direction and having the maximum density of all layers. That is, it can be produced by extruding each rubber composition described above into a shape of each tire tread at an unvulcanized stage, attaching them together with other tire members on a tire forming machine, and molding them by a usual method, thereby forming an unvulcanized tire, followed by pressurizing and vulcanizing this unvulcanized tire in a vulcanizing machine. Vulcanization conditions are not particularly limited, and examples thereof include a method of vulcanizing at 150 to 200°C for 10 to 30 minutes.

<Application>

The tire of the present disclosure may be a pneumatic tire or a non-pneumatic tire, but is preferably a pneumatic tire. Moreover, the tire of the present disclosure can be used as various tires such as a tire for a passenger car, a tire for a truck/bus, a tire for a motorcycle, a high-performance tire such as a racing tire, a winter type tire, and a run flat tire, and in particular, it can be appropriately used as a tire for a passenger car.

Among them, when the tire is applied to a pneumatic tire for a passenger car, it preferably satisfies the above-described inequality (I). Since the pneumatic tire for a passenger car satisfying the above-described inequality (I) has a narrower width with respect to the outer diameter, it is considered that the contribution of the vibration in the tread part during running is reduced, the vibration noise of the tread is reduced, and the natural frequency is raised to a high frequency, so that an effect of less sensible to a human body can be expected.

Examples and Comparative examples

Hereinafter, a tire where a tread part is composed of two rubber layers will be described. A rubber layer constituting a tread surface shall be a first layer, and an inner rubber layer than the rubber layer constituting the tread surface in the tire radial direction and having the maximum density shall be a second layer.

<Producing low-density member>

(Low-density member 1 (sealant layer))

Each component in the compounding formulations shown in Table 1 was put into a twin-screw kneading extruder and kneaded under a condition of a barrel temperature of 100°C and 200 rpm to prepare a sealant. Details of each component described in Table 1 are as follows.
Butyl rubber: Butyl 268 (manufactured by Exxon Mobil Corporation, Mooney viscosity (ML1 + 8 (125°C)) = 32)
Liquid polybutene: Nisseki polybutene HV300 (manufactured by JXTG Nippon Oil 8v Energy Corporation., kinematic viscosity at 40°C: 26,000 mm$^2$/s, kinematic viscosity at 100°C: 590 mm$^2$/s, number average molecular weight: 1,400)
Carbon black: N330 (manufactured by Cabot Japan K.K., HAF grade, DBP oil absorption amount: 102 mL/ 100 g)
Crosslinking agent: BPO (dibenzoyl peroxide manufactured by NOF CORPORATION)
Crosslinking aid: VULNOC GM (p-benzoquinone dioxime manufactured by Ouchi Shinko Chemical Industrial Co., Ltd.)

Table 1

|  | Sealant |
| --- | --- |
| Butyl rubber | 100 |
| Liquid polybutene | 200 |
| Carbon black | 50 |
| Crosslinking agent | 10 |
| Crosslinking aid | 10 |
| Viscosity at 0°C (kPa·s) | 40 |
| Viscosity at 100°C (kPa·s) | 7 |

Such sealant was used to form a sealant layer. The sealant layer was formed on the inner circumferential surface of the tire in the tread part, the width of the sealant layer being substantially the width of the belt layer and the thickness of the sealant layer being 3.0 mm. The sealant layer was designated as a low-density member 1.

(Low-density member 2 (noise suppressing body))

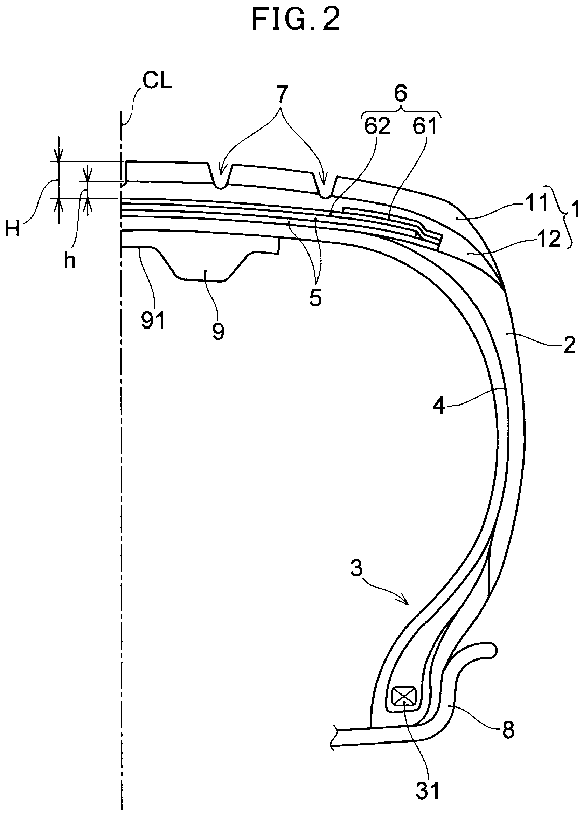

As the noise suppressing body, one having the shape shown in FIG. 2 was used and designated as a low-density member 2. The noise suppressing body has a volume of 15% of the total volume of the cavity of the tire, a density

of $2.7 \times 10^{-2}$ g/cm$^3$, and a Tg of -50°C.

(Low-density member 3 (three-dimensional reticulate structure))

Using Pelprene as resin, a three-dimensional reticulate structure (apparent density: $5.1 \times 10^{-2}$ g/cm$^3$) was produced according to the producing method described in JP 2018-90131 A. Using this three-dimensional reticulate structure, a sound absorbing layer with a width of 100 mm, a thickness of 80 mm, and a cross-sectional area ratio of 41% was formed on the inner circumferential surface of the tire in the tread part and designated as a low-density member 3. Besides, a hollow ratio of the filament forming the three-dimensional reticulate structure was 50%.

<Producing rubber composition>

(Various chemicals)

NR: TSR20 (isoprene-based rubber)
BR: Ubepol BR150B (high cis BR, cis content: 97%, trans content: 2%, vinyl content: 1%, available from Ube Industries, Ltd.)
SBR: Modified solution-polymerized SBR produced in Production example 1 described later (styrene content: 30% by mass, vinyl bond amount: 52 mol%, Mw: 250,000, non-oil-extended product)
Liquid Polymer 1: LIR-50 (Liquid IR, available from Kuraray Co., Ltd.)
Liquid polymer 2: Ricon 100 (liquid SBR, available from Cray Valley)
Liquid Polymer 3: Nisseki polybutene HV-300 (Liquid polybutene, available from JXTG Nippon Oil 8v Energy Corporation)
Carbon black: N220 (ISAF, N$_2$SA: 111 m$^2$/g, DBP oil absorption amount: 115 mL/ 100 g, available from Cabot Japan K.K.)
Silica: ULTRASIL (Registered Trademark) VN3 manufactured by Evonik Degussa (N$_2$SA: 175 m$^2$/g, average primary particle size: 17 nm).
Silane coupling agent: Si266 manufactured by Evonik Degussa (bis (3-triethoxysilylpropyl)disulfide)
Oil: VivaTec 400 (TDAE oil, available from H8vR Group)
Resin 1: Sylvares SA85 (copolymer of α-methylstyrene and styrene (aromatic vinyl-based resin), softening point: 85°C, SP value: 9.1, Tg: 43°C, available from Arizona Chemical Company)
Resin 2: ECR-373 (copolymer of C5 fraction and C9 fraction (C5-C9-based petroleum resin), softening point: 86°C, available from Exxon Mobil Corporation)
Resin 3: MARUKAREZ M-890A (dicyclopentadiene-based resin (C5-based petrochemical resin), softening point: 105°C, available from Maruzen Petrochemical Co., Ltd.)
Wax: OZOACE 0355 (paraffin-based, available from Nippon Seiro Co., Ltd.)
Antioxidant: Antigen 6C (N-(1,3-dimethylbutyl)-N'-phenyl-p-phenylenediamine (6PPD), available from Sumitomo Chemical Co., Ltd.)
Zinc oxide: Zinc oxide No. 1 (available from Mitsui Mining 8s Smelting Co., Ltd.)
Stearic acid: Bead stearic acid "Tsubaki" (available from NOF CORPORATION)
Sulfur: HK200-5 (5% oil-containing powdered sulfur, available from Hosoi Chemical Industry Co., Ltd.)
Vulcanization Accelerator 1: Nocceler CZ (N-cyclohexyl-2-benzothiazolylsulfeneamide (CBS), available from Ouchi Shinko Chemical Industrial Co., Ltd.)
Vulcanization Accelerator 2: Nocceler D (1,3-diphenylguanidine (DPG), available from Ouchi Shinko Chemical Industrial Co., Ltd.)

Production example 1: Synthesis of SBR

Cyclohexane, tetrahydrofuran, styrene, and 1,3-butadiene were charged into a nitrogen-substituted autoclave reactor. After adjusting the temperature of the contents of the reactor to 20°C, n-butyllithium was added to initiate polymerization. Polymerization was carried out under an adiabatic condition, and the temperature reached 85°C of the maximum temperature. When a polymerization conversion rate reached 99%, 1,3-butadiene was added, and after further polymerization for 5 minutes, N,N-bis(trimethylsilyl)-3-aminopropyltrimethoxysilane was added as a denaturant to perform reaction. After completion of the polymerization reaction, 2,6-di-tert-butyl-p-cresol was added. Next, the mixture was subjected to removal of solvent by a steam stripping and dried by a heat roll which temperature was adjusted to 110°C to obtain a SBR.

(Producing unvulcanized rubber composition for first layer)

According to the compounding formulations shown in Table 2, using a 1.7 L closed Banbury mixer, all chemicals other than sulfur and vulcanization accelerators were kneaded until a discharge temperature of 170°C for 5 minutes to obtain a kneaded product. Furthermore, the obtained kneaded product was kneaded again (remilled) with the Banbury mixer at a discharge temperature of 150°C for 4 minutes. Next, using a twin-screw open roll, sulfur and vulcanization accelerators were added to the obtained kneaded product, and the mixture was kneaded for 4 minutes until the temperature reached 105°C to obtain an unvulcanized rubber composition for the first layer.

(Producing unvulcanized rubber composition for second layer)

According to the compounding formulations shown in Table 3, using the 1.7 L closed Banbury mixer, all chemicals other than sulfur and vulcanization accelerators were kneaded at a discharge temperature of 170°C for 5 minutes to obtain a kneaded product. Furthermore, the obtained kneaded product was kneaded again (remilled) with the Banbury mixer at a discharge temperature of 150°C for 4 minutes. Next, using a twin-screw open roll, sulfur and vulcanization accelerators were added to the obtained kneaded product, and the mixture was kneaded for 4 minutes until the temperature reached 105°C to obtain an unvulcanized rubber composition for the second layer.

<Producing test tire>

The unvulcanized rubber composition for the first layer obtained above was extruded into a shape of a rubber layer constituting a tread surface of a tread part with an extruder equipped with a mouthpiece having a predetermined shape, and the unvulcanized rubber composition for the second layer obtained above was extruded into a shape of an inner rubber layer than the rubber layer constituting the tread surface in the tire radial direction and having the maximum density of all layers with the extruder equipped with the mouthpiece having the predetermined shape, and the extruded products were attached together with other tire members on a tire forming machine to form an unvulcanized tire. The unvulcanized tire was press-vulcanized under a condition of 170°C for 15 minutes to produce a test tire (size: 175/60R18). Besides, the thickness of the first layer and the thickness of the second layer were adjusted to comply with the ratio (%) of the thickness to the tread part of the second layer as shown in Table 3. Table 3 shows which of the low-density members 1 to 3 was used when low-density members were used.

<Evaluation>

The obtained test tires were evaluated as follows. The results are shown in Table 3.

(Running durability)

The test tire was subjected to a bench-running on a protrusion (columnar one having a height of 5 mm and a diameter of 10 mm) for 15 minutes under a condition of an internal pressure of 250 kPa, a load of 4.51 kN, and a speed of 100 km/h. An amount of rubber chipped during running was measured, and indicated as an index assuming that Comparative example 1 is 100. The results show that the larger the index value is, the smaller the amount of rubber chipped is, which is preferable. A target performance shall be 100 or more.

(Noise of actual vehicle)

The test tires were mounted on a vehicle, and the vehicle ran on a road surface in accordance with ISO road surface (ISO10844-2014) at a speed of 50 ± 1 km/h. A sound pressure value with a frequency of 800 Hz was recorded at a point of 10 m during running on a section of 20 m. The value was indicated as an index assuming that Comparative example 1 is 100. The results show that the larger the index value is, the smaller the sound is, which is preferable. A target performance shall be more than 100.

Table 2

| First Layer | |
|---|---|
| Compounding amount (part by mass) | |
| NR | 40 |
| SBR | 50 |
| BR | 10 |
| Carbon black | 5.0 |
| Silica | 65 |
| Silane coupling agent | 6.5 |
| Oil | 2.0 |
| Resin 1 | 3.0 |
| Zinc oxide | 3.0 |
| Stearic acid | 3.0 |
| Sulfur | 1.5 |
| Vulcanization accelerator 1 | 2.0 |
| Vulcanization accelerator 2 | 1.0 |

Table 3

| | Example | | | | | | | | | | | | | Comparative example | | | |
|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 1 | 2 | 3 | 4 |
| First layer | Compounding formulations in Table 2 | | | | | | | | | | | | | | | | |
| Second layer | | | | | | | | | | | | | | | | | |
| Compounding amount (part by mass) | | | | | | | | | | | | | | | | | |
| NR | 75 | 100 | 75 | 50 | 50 | 50 | 75 | 75 | 100 | 100 | 75 | 75 | 75 | 75 | 100 | - | - |
| BR | - | - | - | 25 | 25 | 25 | - | - | - | - | - | - | - | - | - | 50 | 50_ |
| SBR | - | - | - | - | - | - | - | - | - | - | - | - | - | - | - | 25 | 50 |
| Liquid polymer 1 | 25 | - | 25 | 25 | 25 | 25 | - | - | - | - | 25 | 25 | 25 | 25 | - | 25 | - |
| Liquid polymer 2 | - | - | - | - | - | - | 25 | - | - | - | - | - | - | - | - | - | - |
| Liquid polymer 3 | - | - | - | - | - | - | - | 25 | - | - | - | - | - | - | - | - | - |
| Carbon black (CB) | 70 | 70 | 70 | 70 | 35 | 35 | 70 | 70 | 70 | 70 | 70 | 70 | 70 | 70 | 70 | 70 | 70 |
| Oil | 10 | - | 10 | 10 | 10 | 10 | 10 | 10 | - | - | 10 | 10 | 10 | 10 | - | 10 | 10 |
| Resin 1 | - | 10 | - | - | - | - | - | - | - | - | - | - | - | - | 10 | - | - |
| Resin 2 | - | - | - | - | - | - | - | - | 10 | - | - | - | - | - | - | - | - |
| Resin 3 | - | - | - | - | - | - | - | - | - | 10 | - | - | - | - | - | - | - |
| Wax | 1 | 1 | 1 | 1 | 1 | 1 | 1 | 1 | 1 | 1 | 1 | 1 | 1 | 1 | 1 | 1 | 1 |
| Antioxidant | 3 | 3 | 3 | 3 | 3 | 3 | 3 | 3 | 3 | 3 | 3 | 3 | 3 | 3 | 3 | 3 | 3 |
| Zinc oxide | 70 | 70 | 70 | 70 | 70 | 200 | 70 | 70 | 70 | 70 | 70 | 70 | 70 | 3 | 3 | 70 | 3 |
| Stearic acid | 2 | 2 | 2 | 2 | 2 | 2 | 2 | 2 | 2 | 2 | 2 | 2 | 2 | 2 | 2 | 2 | 2 |
| Sulfur | 2 | 2 | 2 | 2 | 2 | 2 | 2 | 2 | 2 | 2 | 2 | 2 | 2 | 2 | 2 | 2 | 2 |
| Vulcanization accelerator 1 | 2 | 2 | 2 | 2 | 2 | 2 | 2 | 2 | 2 | 2 | 2 | 2 | 2 | 2 | 2 | 2 | 2 |
| Density Db (g/cm$^3$) | 1.60 | 1.60 | 1.60 | 1.60 | 1.50 | 2.00 | 1.60 | 1.60 | 1.60 | 1.60 | 1.60 | 1.60 | 1.60 | 1.10 | 1.10 | 1.60 | 1.10 |
| Db/Dc | 1.28 | 1.28 | 1.28 | 1.28 | 1.20 | 1.60 | 1.28 | 1.28 | 1.28 | 1.28 | 1.28 | 1.28 | 1.28 | 0.88 | 0.88 | 1.28 | 0.88 |
| Thickness ratio to tread part (%) | 10 | 10 | 30 | 30 | 30 | 30 | 10 | 10 | 10 | 10 | 10 | 10 | 10 | 10 | 10 | 10 | 10 |
| CB content (% by mass) | 27 | 27 | 27 | 27 | 16 | 10 | 27 | 27 | 27 | 27 | 27 | 27 | 27 | 36 | 36 | 27 | 36 |
| Low-density member | - | - | - | - | - | - | - | - | - | - | 1 | 2 | 3 | - | - | - | - |
| Evaluation | | | | | | | | | | | | | | | | | |
| Running durability (index) | 110 | 111 | 109 | 108 | 106 | 100 | 110 | 109 | 107 | 108 | 110 | 110 | 110 | 100 | 100 | 83 | 78 |

(continued)

| Evaluation | | | | | | | | | | | | | | | | | |
|---|---|---|---|---|---|---|---|---|---|---|---|---|---|---|---|---|---|
| Noise of actual vehicle (index) | 109 | 107 | 110 | 109 | 111 | 113 | 108 | 110 | 108 | 110 | 108 | 106 | 109 | 100 | 99 | 95 | 88 |

From the results in Table 3, it can be seen that the tires in Examples can suppress the vibration noise of the tires during running while securing running durability as compared with the tires in Comparative examples.

EXPLANATION OF NUMERALS

1 Tread part
11 Rubber layer constituting tread surface
12 Rubber layer having the maximum density
2 Sidewall
3 Bead part
31 Bead core
4 Carcass
5 Belt
6 Band
61 Edge band
62 Full band
7 Circumferential groove
8 Rim
9 Low-density member
91 Concave groove
H Thickness of tread part
h Thickness of rubber layer having the maximum density

**Claims**

1. A tire comprising:

    a tread part (1) composed of two or more rubber layers,
    wherein, of the two or more rubber layers, a density Dc of a rubber layer constituting a tread surface (11) and a density Db of an inner rubber layer (12) other than the rubber layer constituting the tread surface in the tire radial direction, the density Db being the maximum density of all layers, satisfy the following inequality:

$$ Db/Dc \geq 1.25, $$

    and
    wherein the rubber layer having the maximum density (12) is composed of a rubber composition comprising a rubber component comprising an isoprene-based rubber,
    **characterized in that**
    the rubber composition satisfies at least the following (a) or (b),

        (a) the rubber component comprises a liquid polymer, wherein the liquid polymer is at least one selected from the group consisting of a liquid isoprene rubber and a liquid styrene-isoprene rubber;
        (b) the rubber composition comprises a resin, wherein the resin is at least one selected from the group consisting of a petroleum resin and a phenol-based resin.

2. The tire of claim 1, wherein a ratio of thickness of the rubber layer having the maximum density (12) to the tread part (11) is 20% or more.

3. The tire of claim 1 or 2, wherein the rubber component comprises at least one diene-based rubber other than the isoprene-based rubber.

4. The tire of any one of claims 1 to 3, wherein the rubber composition comprises carbon black, and a content of the carbon black in the rubber composition is less than 25% by mass.

**5.** The tire of any one of claims 1 to 4, wherein the Dc and the Db satisfy the following inequality:

$$Db/Dc \geq 1.05.$$

**6.** The tire of any one of claims 1 to 4, wherein the Dc and the Db satisfy the following inequality:

$$Db/Dc \geq 1.10.$$

**7.** The tire of any one of claims 1 to 6, wherein the Db is 2.20 g/cm$^3$ or less.

**8.** The tire of any one of claims 1 to 7, further comprising a low-density member (9) having a density lower than the Dc on an inner circumferential surface of the tread part (1).

**9.** The tire of any one of claims 1 to 8, wherein an outer diameter Dt of the tire in mm and a cross-sectional width Wt of the tire in mm satisfy the following inequality (I):

$$1963.4 \leq \frac{Dt^2 \times \frac{\pi}{4}}{Wt} \leq 2827.4 \qquad \geq \blacksquare \ (I).$$

**Patentansprüche**

**1.** Reifen, umfassend:

einen Laufflächenteil (1), der aus zwei oder mehr Kautschukschichten besteht,
wobei von den zwei oder mehr Kautschukschichten eine Dichte Dc einer Kautschukschicht, die eine Laufflächenoberfläche (11) bildet, und eine Dichte Db einer inneren Kautschukschicht (12), die nicht die Kautschukschicht ist, die die Laufflächenoberfläche in der radialen Richtung des Reifens bildet, wobei die Dichte Db die maximale Dichte aller Schichten ist, die folgende Ungleichung erfüllen:

$$Db/Dc \geq 1{,}25,$$

und
wobei die Kautschukschicht mit der maximalen Dichte (12) aus einer Kautschukzusammensetzung besteht, die eine Kautschukkomponente umfasst, die einen Kautschuk auf Isoprenbasis enthält,
**dadurch gekennzeichnet, dass**
die Kautschukzusammensetzung mindestens die folgenden Bedingungen (a) oder (b) erfüllt,

(a) die Kautschukkomponente umfasst ein flüssiges Polymer, wobei das flüssige Polymer mindestens eines ist, das aus der Gruppe ausgewählt ist, die aus einem flüssigen Isoprenkautschuk und einem flüssigen Styrol-Isopren-Kautschuk besteht;
(b) die Kautschukzusammensetzung ein Harz umfasst, wobei das Harz mindestens eines ist, das aus der Gruppe ausgewählt ist, die aus einem Petroleumharz und einem Harz auf Phenolbasis besteht.

**2.** Reifen nach Anspruch 1, wobei ein Verhältnis der Dicke der Kautschukschicht mit der maximalen Dichte (12) zu dem Laufflächenteil (11) 20% oder mehr beträgt.

**3.** Reifen nach Anspruch 1 oder 2, wobei die Kautschukkomponente mindestens einen anderen Kautschuk auf Dienbasis als den Kautschuk auf Isoprenbasis umfasst.

**4.** Reifen nach einem der Ansprüche 1 bis 3, wobei die Kautschukzusammensetzung Ruß umfasst und der Gehalt des Rußes in der Kautschukzusammensetzung weniger als 25 Massen-% beträgt.

**5.** Reifen nach einem der Ansprüche 1 bis 4, wobei Dc und Db die folgende Ungleichung erfüllen:

$$Db/Dc \geq 1,05.$$

**6.** Reifen nach einem der Ansprüche 1 bis 4, wobei Dc und Db die folgende Ungleichung erfüllen:

$$Db/Dc \geq 1,10.$$

**7.** Reifen nach einem der Ansprüche 1 bis 6, wobei der Db-Wert 2,20 g/cm$^3$ oder weniger beträgt.

**8.** Reifen nach einem der Ansprüche 1 bis 7, der ferner ein Element (9) mit niedriger Dichte umfasst, das eine geringere Dichte als Dc auf einer inneren Umfangsfläche des Laufflächenteils (1) aufweist.

**9.** Reifen nach einem der Ansprüche 1 bis 8, wobei ein Außendurchmesser Dt des Reifens in mm und eine Querschnittsbreite Wt des Reifens in mm die folgende Ungleichung (I) erfüllen:

$$1963.4 \leq \frac{Dt^2 \times \frac{\pi}{4}}{Wt} \leq 2827.4 \qquad (I).$$

**Revendications**

**1.** Pneu comprenant :

une partie bande de roulement (1) composée de deux couches de caoutchouc ou plus,
parmi les deux couches de caoutchouc ou plus, une densité De d'une couche de caoutchouc constituant une surface de bande de roulement (11) et une densité Db d'une couche de caoutchouc interne (12) autre que la couche de caoutchouc constituant la surface de bande de roulement dans la direction radiale de pneu, la densité Db étant la densité maximale de toutes les couches, satisfaisant l'inégalité suivante :

$$Db/Dc \geq 1,25,$$

et
la couche de caoutchouc ayant la densité maximale (12) étant composée d'une composition de caoutchouc comprenant un composant de type caoutchouc comprenant un caoutchouc à base d'isoprène,
**caractérisé en ce que**
la composition de caoutchouc satisfait au moins (a) ou (b) qui suit,

(a) le composant de type caoutchouc comprend un polymère liquide, le polymère liquide étant au moins l'un choisi dans le groupe constitué par un caoutchouc d'isoprène liquide et un caoutchouc de styrène-isoprène liquide
(b) la composition de caoutchouc comprend une résine, la résine étant au moins l'une choisie dans le groupe constitué par une résine de pétrole et une résine à base de phénol.

**2.** Pneu selon la revendication 1, un rapport d'épaisseur de la couche de caoutchouc ayant la densité maximale (12) sur la partie bande de roulement (11) étant de 20 % ou plus.

**3.** Pneu selon la revendication 1 ou 2, le composant de type caoutchouc comprenant au moins un caoutchouc à base de diène autre que le caoutchouc à base d'isoprène.

**4.** Pneu selon l'une quelconque des revendications 1 à 3, la composition de caoutchouc comprenant du noir de carbone, et une teneur du noir de carbone dans la composition de caoutchouc étant inférieure à 25 % en masse.

**5.** Pneu selon l'une quelconque des revendications 1 à 4, la De et la Db satisfaisant l'inégalité suivante :

$$Db/Dc \geq 1,05.$$

**6.** Pneu selon l'une quelconque des revendications 1 à 4, la De et la Db satisfaisant l'inégalité suivante :

$$Db/Dc \geq 1,10.$$

**7.** Pneu selon l'une quelconque des revendications 1 à 6, la Db étant de 2,20 g/cm$^3$ ou moins.

**8.** Pneu selon l'une quelconque des revendications 1 à 7, comprenant en outre un élément à basse densité (9) ayant une densité inférieure à la De sur une surface circonférentielle interne de la partie bande de roulement (1).

**9.** Pneu selon l'une quelconque des revendications 1 à 8, un diamètre externe Dt du pneu en mm et une largeur de section transversale Wt du pneu en mm satisfaisant l'inégalité suivante (I) :

$$1963,4 \quad \leq \quad \frac{Dt^2 \times \frac{\pi}{4}}{Wt} \leq \quad 2827,4 \qquad (I)$$

.

# FIG. 1

# FIG.2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H06156016 B
- US 2011259498 A
- JP 2020023152 A
- JP 2019142503 A
- JP 2018090131 A

**Non-patent literature cited in the description**

- Table of Solubility Parameters. **K.L. HOY.** Solvent and Coatings Materials Research and Development Department. Union Carbites Corp, 1985